Europäisches Patentamt

(19) **European Patent Office**

Office européen des brevets

(11) Veröffentlichungsnummer: **0 011 691**
**B1**

(12) **EUROPÄISCHE PATENTSCHRIFT**

(45) Veröffentlichungstag der Patentschrift:
16.09.81

(51) Int. Cl.³: **C 04 B 7/44**

(21) Anmeldenummer: **79103712.0**

(22) Anmeldetag: **29.09.79**

(54) **Verfahren zur Wärmebehandlung von feinkörnigem Gut.**

(30) Priorität: **30.11.78 DE 2851887**

(43) Veröffentlichungstag der Anmeldung:
**11.06.80 Patentblatt 80/12**

(45) Bekanntmachung des Hinweises auf die Patenterteilung:
**16.09.81 Patentblatt 81/37**

(84) Benannte Vertragsstaaten:
**DE FR GB IT**

(56) Entgegenhaltungen:
**DE-A1-2 519 884**
**DE-A1-2 617 803**
**DE-A1-2 714 811**

**ZEMENT-KALK-GIPS, Nr. 4,**
Wiesbaden
O. EILL «Regelkonzept für Wärmetauscheröfen»
Seiten 164 bis 166

(73) Patentinhaber: **Krupp Polysius AG,**
**Graf-Galen-Strasse 17, D-4720 Beckum (DE)**

(72) Erfinder: **Goldmann, Wolf, Dipl.-Ing.,**
**Agnes-Miegel-Strasse 9, D-4720 Beckum (DE)**
Erfinder: **Michaelsen, Dieter, Ing. (grad.), Werseweg 68,**
**D-4720 Beckum (DE)**
Erfinder: **Dreyer, Dieter, Ing. (grad.), Mohnstrasse 13,**
**D-4722 Ennigerloh (DE)**
Erfinder: **Hoislepe, Dietmar, Kirschweg 13,**
**D-4722 Ennigerloh (DE)**
Erfinder: **Tiggesbäumker, Peter, Dipl.-Ing.,**
**Prozessionsweg 5, D-4740 Oelde (DE)**
Erfinder: **Bauer, Klaus, Ing. (grad.), Von**
**Ketteler-Strasse 11, D-4740 Oelde (DE)**
Erfinder: **Dürr, Manfred, Dipl.-Ing., Brodhagen 28,**
**D-4740 Oelde (DE)**
Erfinder: **Mersmann, Heinz Georg, Ing. (grad.),**
**Christian-Grabbe-Strasse 11, D-4720 Beckum (DE)**

(74) Vertreter: **Tetzner, Volkmar, Dr.-Ing. Dr. jur.,**
**Van-Gogh-Strasse 3, D-8000 München 71 (DE)**

## Verfahren zur Wärmebehandlung von feinkörnigem Gut

Die Erfindung betrifft ein Verfahren zur Wärmebehandlung von feinkörnigem Gut, insbesondere von Zementrohmaterial, das in einem mehrstufigen Zyklonwärmer durch Heissgase vorgewärmt, anschliessend in einer Vorkalzinationszone durch zusätzlichen Brennstoff weitgehend entsäuert und schliesslich in einem Drehrohrofen fertiggebrannt wird, wobei im Normalbetrieb die Brennstoffzufuhr zur Vorkalzinationszone in Abhängigkeit von einer Gastemperatur des Zyklonvorwärmers selbsttätig derart geregelt wird, dass bei Verringerung dieser Gastemperatur die Brennstoffzufuhr vergrössert wird und umgekehrt.

Bei der Wärmebehandlung von feinkörnigem Gut, insbesondere von Zementrohmaterial, hat es sich aus anlagentechnischen Gründen als günstig erwiesen, einen wesentlichen Teil der Kalzination des Gutes ausserhalb des Drehrohrofens in einer Vorkalzinationszone durchzuführen, die den untersten Teil des Vorwärmers bzw. den Übergang zwischen Zyklonvorwärmer und Drehrohrofen bildet (vgl. DE-B 2 324 565 und DE-B 2 611 239). Da es sich bei dieser Kalzination (Austreibung des $CO_2$ aus dem Rohmaterial) um einen stark endothermen Vorgang handelt, muss der Vorkalzinationszone, die von den Abgasen des Drehrohrofens und/oder von Kühlerluft durchsetzt wird, zusätzlich Brennstoff zugeführt werden.

Die Regelung dieser Brennstoffzufuhr zur Vorkalzinationszone erfolgt bisher üblicherweise in Abhängigkeit von der Abgastemperatur der Vorkalzinationszone (vgl. DE-A 2 714 811) und zwar derart, dass bei einer Verringerung dieser Gastemperatur die Brennstoffzufuhr vergrössert, bei einer Erhöhung der Gastemperatur die Brennstoffzufuhr dagegen verringert wird. Auf diese Weise lassen sich im Normalbetrieb auch bei Schwankungen in der Aufgabemenge des Gutes optimale Brennverhältnisse in der Vorkalzinationszone erreichen.

Nähere Untersuchungen haben jedoch gezeigt, dass dieses bekannte Regelverfahren beim Auftreten bestimmter Störungsfälle versagt. Stellt sich beispielsweise in der Vorkalzinationszone eine unvollständige Verbrennung des zugeführten Brennstoffes ein (etwa infolge Störungen in der Luftzufuhr), so sinkt die Abgastemperatur der Vorkalzinationszone, was die Regelung veranlasst, die Brennstoffzufuhr zu vergrössern. Die aufgetretene Störung wird dadurch weiter vergrössert.

Der Erfindung liegt daher die Aufgabe zugrunde, ein Verfahren der eingangs genannten Art so auszubilden, dass nicht nur im Normalbetrieb, sondern auch beim Auftreten der in der Praxis wichtigsten Störungsfälle eine rasche Anpassung der zugeführten Brennstoffmenge an die jeweils vorliegenden Verhältnisse erreicht wird.

Diese Aufgabe wird erfindungsgemäss dadurch gelöst, dass zugleich die Temperatur des Gutes nach Passieren der Vorkalzinationszone gemessen, die Differenz zwischen dieser Guttemperatur und der genannten Gastemperatur ermittelt und beim Erreichen eines Maximal- oder Minimalwertes dieser Temperaturdifferenz die Regelung der Brennstoffzufuhr zur Vorkalzinationszone auf Handbetrieb umgeschaltet wird.

Ergibt sich beispielsweise in der Vorkalzinationszone eine unvollständige Verbrennung des zugeführten Brennstoffes, so sinkt hierdurch die Gastemperatur (die im Normalbetrieb zur Regelung der Brennstoffzufuhr herangezogen wird). Dadurch wird die Differenz zwischen dieser Gastemperatur und der Guttemperatur kleiner. Beim Erreichen eines vorgegebenen Minimalwertes dieser Temperaturdifferenz wird dann die Regelung der Brennstoffzufuhr zur Vorkalzinationszone auf Handbetrieb umgeschaltet.

Tritt ferner im Betrieb eine Störung durch eine Gutverstopfung des der Vorkalzinationszone nachgeschalteten Zyklons auf, so wird durch die Messeinrichtung, die die Temperatur des in diesem Zyklon abgeschiedenen Gutes bestimmt, eine niedrigere Guttemperatur ermittelt (da bei der üblichen Temperaturmessung durch Thermoelemente in der Gutleitung durch die Verstopfung kein einwandfreier Kontakt zwischen Thermoelement und Gut vorhanden ist).

Die Differenz zwischen Gastemperatur und Guttemperatur steigt somit an und löst beim Erreichen eines vorgegebenen Maximalwertes gleichfalls die Umschaltung der Brennstoffzufuhr auf Handbetrieb aus.

Ähnlich liegen die Verhältnisse bei einer weiteren, in der Praxis gelegentlich auftretenden Störung durch Ansatz- und Agglomeratbildung bei Überschreiten der kritischen Guttemperatur. Auch in diesem Falle wird fälschlicherweise eine zu niedrige Guttemperatur gemessen, was beim Erreichen des vorgegebenen Maximalwertes der Temperaturdifferenz zwischen Gas und Gut die Umschaltung der Brennstoffzufuhr auf Handbetrieb bewirkt. Es leuchtet ein, dass gerade in diesem Falle eine Beibehaltung oder gar Vergrösserung der Brennstoffmenge durch die automatische Regelung durch die verstärkte Ansatz- und Agglomeratbildung zu grossen Störungen führen kann, während bei Umschaltung der Brennstoffzufuhr auf Handbetrieb eine rasche Normalisierung der Verhältnisse erreicht werden kann.

Wird das erfindungsgemässe Verfahren unter Verwendung einer Anlage durchgeführt, bei der die Vorkalzinationszone durch die den Drehrohrofen mit der untersten Zyklonstufe des Zyklonvorwärmers verbindende Gasleitung gebildet wird, so wird zweckmässig im Normalbetrieb die Brennstoffzufuhr zur Vorkalzinationszone in Abhängigkeit von der Abgastemperatur der untersten Zyklonstufe geregelt und die Differenz zwischen dieser Abgastemperatur und der Temperatur des in der untersten Zyklonstufe abgeschiedenen Gutes überwacht.

Bei Benutzung einer Anlage, bei der die unterste Zyklonstufe durch wenigstens zwei parallel geschaltete Zyklone gebildet wird, ist es gemäss der Erfindung günstig, wenn im Normalbetrieb die Brennstoffzufuhr zur Vorkalzinationszone in Abhängigkeit vom Mittelwert der Abgastemperaturen der beiden Zyklone der untersten Zyklonstufe geregelt, die Differenz zwischen jeder der beiden Abgastemperaturen und der Temperatur des aus dem zugehörigen Zyklon der untersten Zyklonstufe abgeschiedenen Gutes überwacht und die Regelung der Brennstoffzufuhr zur Vorkalzinationszone dann auf Handbetrieb umgeschaltet wird, wenn eine der beiden Temperaturdifferenzen einen Maximal- oder Minimalwert erreicht.

Der Sollwert der Differenz zwischen Gas- und Guttemperatur kann bei 20°C liegen. Zweckmässig erfolgt in diesem Falle die Umschaltung der Brennstoffzufuhr auf Handbetrieb bei einem Minimalwert der Temperaturdifferenz von 0°C und einem Maximalwert von 40°C.

Zwei Ausführungsbeispiele von Anlagen zur Durchführung des erfindungsgemässen Verfahrens sind in der Zeichnung veranschaulicht.

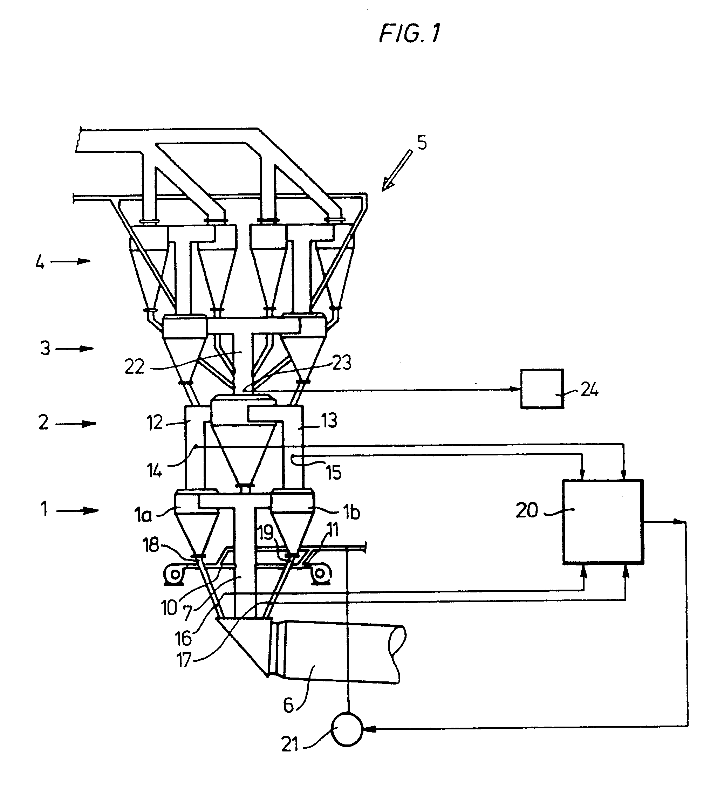

Die in Fig. 1 dargestellte Anlage enthält einen aus vier Zyklonstufen 1, 2, 3, 4, bestehenden Zyklonvorwärmer 5 sowie einen Drehrohrofen 6. Die Vorkalzinationszone wird durch die den Drehrohrofen 6 mit den beiden Zyklonen 1a, 1b der untersten Zyklonstufe 1 verbindende Gasleitung 7 gebildet. In diese Gasleitung 7 wird über Leitungen 10, 11 Brennstoff eingeführt.

Im übrigen besitzt der Zyklonvorwärmer 5 einen üblichen Aufbau: Die Zyklonstufe 2 besteht aus einem einzigen Zyklon, die Zyklonstufe 3 aus zwei parallel geschalteten Zyklonen und die oberste Zyklonstufe 4 aus vier parallel geschalteten Zyklonen. Die Verbindung der Zyklone durch die Gas- und Gutleitungen ergibt sich aus der Zeichnung und bedarf keiner Erläuterung.

In den beiden von den Zyklonen 1a, 1b der untersten Zyklonstufe 1 zur Zyklonstufe 2 führenden Gasleitungen 12, 13 befinden sich Temperaturfühler 14, 15. Weiterhin sind Temperaturfühler 16, 17 in den Gutleitungen 18, 19 vorgesehen, die von den Zyklonen 1a, 1b der untersten Zyklonstufe 1 zum Drehrohrofen 6 führen.

Die Temperaturfühler 14 bis 17 sind an eine Mess-, Anzeige- und Regeleinrichtung angeschlossen, die über ein Stellorgan 21 auf die Brennstoffzufuhr zur Vorkalzinationszone einwirkt.

Schliesslich enthält die Anlage noch einen in der Abgasleitung 22 der Zyklonstufe 2 angeordneten Fühler 23, der an eine Messeinrichtung 24 angeschlossen ist, die den $O_2$- und CO-Gehalt der Abgase bestimmt.

Die Funktion der Anlage gemäss Fig. 1 dürfte aufgrund der obigen Erläuterungen ohne weiteres verständlich sein:

Im Normalbetrieb wird die der Vorkalzinationszone (Gasleitung 7) über die Leitungen 10, 11 zugeführte Brennstoffmenge von der Einrichtung 20 ausschliesslich in Abhängigkeit vom Mittelwert der durch die Temperaturfühler 14, 15 gemessenen Abgastemperatur geregelt. Sinkt diese Abgastemperatur ab (etwa infolge einer Vergrösserung der ausgegebenen Gutmenge), so wird die Brennstoffzufuhr vergrössert und umgekehrt. Die Abgastemperatur bleibt im Normalbetrieb innerhalb eines Temperaturbereiches zwischen 800 und 900°C. Wird die Abgastemperatur von 900°C überschritten oder die Abgastemperatur von 800°C unterschritten, so erfolgt eine Umschaltung auf Handbetrieb.

Die Mess-, Anzeige- und Regeleinrichtung 20 überwacht weiterhin die Temperaturdifferenz zwischen den von den Temperaturfühlern 14, 15 gemessenen Abgastemperaturen und den beiden Guttemperaturen, die von den Messfühlern 16, 17 in den Gutleitungen 18, 19 bestimmt werden. Im Normalbetrieb der Anlage liegt diese Temperaturdifferenz für jeden der beiden Zyklone 1a, 1b bei etwa 20°C. Erreicht jedoch diese Temperaturdifferenz für einen der beiden Zyklone den Maximalwert von 40°C oder den Minimalwert von 0°C (letzteres ist denkbar, wenn eine Nachverbrennung von Brennstoff im Zyklon erfolgt), so schaltet die Einrichtung 20 die Anlage von automatischem Regelbetrieb auf Handbetrieb um.

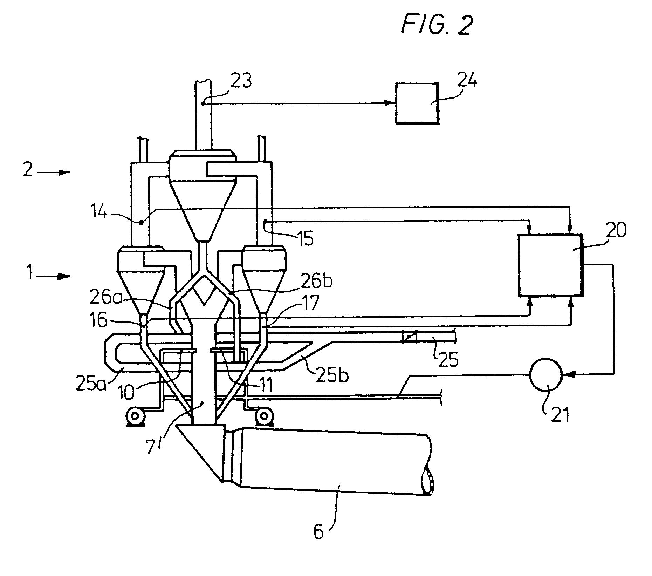

Bei dem Ausführungsbeispiel gemäss Fig. 1 werden der Vorkalzinationszone (Gasleitung 7) als $O_2$-haltiges Verbrennungsmedium ausschliesslich die Abgase des Drehrohrofens 6 zugeführt. Fig. 2 veranschaulicht demgegenüber die Anwendung des erfindungsgemässen Verfahrens in einer Anlage, bei der der Vorkalzinationszone (Gasleitung 7') ausser den Abgasen des Drehrohrofens 6 auch noch Kühler-Luft über die Leitung 25 zugeführt wird. Diese Leitung 25 verzweigt sich in zwei Leitungsstücke 25a, 25b, die beispielsweise an gegenüberliegenden Stellen in die Gasleitung 7' einmünden. In diese Leitungsstücke 25a, 25b wird über Gutleitungen 26a, 26b das Gut aus der zweiten Zyklonstufe 2 eingeführt. Der Brennstoff wird wie beim ersten Ausführungsbeispiel über die Leitungen 10, 11 in die Vorkalzinationszone (Gasleitung 7') eingebracht. Die in Fig. 2 nicht dargestellte dritte und vierte Zyklonstufe 3 bzw. 4 entsprechen dem Ausführungsbeispiel gemäss Fig. 1.

Die Anordnung der Temperaturfühler 14, 15, 16 und 17, der Mess-, Anzeige- und Regeleinrichtung 20, des Stellorganes 21, des Fühlers 23 sowie der Einrichtung 24 entsprechen gleichfalls dem Ausführungsbeispiel der Fig. 1.

**Patentansprüche**

1. Verfahren zur Wärmebehandlung von feinkörnigem Gut, insbesondere von Zementrohmaterial, das in einem mehrstufigen Zyklonvorwärmer durch Heissgase vorgewärmt, anschliessend in einer Vorkalzinationszone durch zusätzlichen Brennstoff weitgehend entsäuert und schliesslich in einem Drehrohrofen fertiggebrannt wird, wobei im Normalbetrieb die Brennstoffzufuhr zur Vorkalzinationszone in Abhängigkeit von einer Gastemperatur des Zyklonvorwärmers selbsttätig derart geregelt wird, dass bei Verringerung dieser Gastemperatur die Brennstoffzufuhr vergrössert wird und umgekehrt, dadurch gekennzeichnet, dass zugleich die Temperatur des Gutes nach Passieren der Vorkalzinationszone gemessen, die Differenz zwischen dieser Guttemperatur und der genannten Gastemperatur ermittelt und beim Erreichen eines Maximal- oder Minimalwertes dieser Temperaturdifferenz die Regelung der Brennstoffzufuhr zur Vorkalzinationszone auf Handbetrieb umgeschaltet wird.

2. Verfahren nach Anspruch 1 unter Verwendung einer Anlage, bei der die Vorkalzinationszone durch die den Drehrohrofen mit der untersten Zyklonstufe des Zyklonvorwärmers verbindende Gasleitung gebildet wird, dadurch gekennzeichnet, dass im Normalbetrieb die Brennstoffzufuhr zur Vorkalzinationszone in Abhängigkeit von der Abgastemperatur der untersten Zyklonstufe geregelt und die Differenz zwischen dieser Abgastemperatur und der Temperatur des in der untersten Zyklonstufe abgeschiedenen Gutes überwacht wird.

3. Verfahren nach den Ansprüchen 1 und 2 unter Verwendung einer Anlage, bei der die unterste Zyklonstufe durch wenigstens zwei parallel geschaltete Zyklone gebildet wird, dadurch gekennzeichnet, dass im Normalbetrieb die Brennstoffzufuhr zur Vorkalzinationszone in Abhängigkeit vom Mittelwert der Abgastemperaturen der beiden Zyklone der untersten Zyklonstufe geregelt, die Differenz zwischen jeder der beiden Abgastemperaturen und der Temperatur des aus dem zugehörigen Zyklon der untersten Zyklonstufe abgeschiedenen Gutes überwacht und die Regelung der Brennstoffzufuhr zur Vorkalzinationszone dann auf Handbetrieb umgeschaltet wird, wenn eine der beiden Temperaturdifferenzen einen Maximal- oder Minimalwert erreicht.

4. Verfahren nach den Ansprüchen 1 und 2, wobei der Sollwert der Differenz zwischen Gas- und Guttemperatur bei 20°C liegt, dadurch gekennzeichnet, dass die Umschaltung der Brennstoffzufuhr auf Handbetrieb bei einem Minimalwert der Temperaturdifferenz von 0°C und bei einem Maximalwert von 40°C erfolgt.

**Claims**

1. Method for heat treating fine-grain material, in particular cement raw material, which is preheated in a multistage cyclone preheater by hot gases, thereafter largely deacidified in a precalcination zone by additional fuel and finally completely burnt in a rotary tubular kiln, the fuel supply to the precalcination zone in normal operation being controlled automatically in dependence upon a gas temperature of the cyclone preheater in such a manner that when said gas temperature becomes smaller the fuel supply is increased and vice versa, characterised in that at the same time the temperature of the material after passing the precalcination zone is measured, the difference between said material temperature and said gas temperature is determined and when a maximum or minimum value of said temperature difference is reached the control of the fuel supply to the precalcination zone is switched to manual operation.

2. Method according to claim 1 using an apparatus in which the precalcination zone is formed by the gas conduit connecting the rotary tubular kiln to the lowermost cyclone stage of the cyclone preheater, characterised in that in normal operation the fuel supply to the precalcination zone is controlled in dependence upon the exhaust gas temperature of the lowermost cyclone stage and the difference between said exhaust gas temperature and the temperature of the material deposited in the lowermost cyclone stage is monitored.

3. Method according to claims 1 and 2 using an apparatus in which the lowermost cyclone stage is formed by at least two parallel-connected cyclones, characterised in that in normal operation the fuel supply to the precalcination zone is controlled in dependence upon the mean value of the exhaust gas temperatures of the two cyclones of the lowermost cyclone stage, the difference between each of the two exhaust gas temperatures and the temperature of the material deposited from the associated cyclone of the lowermost cyclone stage is monitored and the control of the fuel supply to the precalcination zone is switched to manual operation when one of the two temperature differences reaches a maximum or minimum value.

4. Method according to claims 1 and 2 in which the desired value of the difference between gas and material temperature lies at 20°C, characterised in that the switching over of the fuel supply to manual operation takes place at a minimum value of the temperature difference of 0° and a maximum value of 40°.

**Revendications**

1. Procédé de traitement thermique de matière à granulométrie fine, en particulier de matière première du ciment, qui est exposée à des gaz chauds dans un réchauffeur à cyclones à plusieurs étages, qui est ensuite pratiquement désacidifiée par un complément de combustible dans une zone de précalcination et dont la cuisson est finalement achevée dans un four tubulaire rotatif, l'introduction de combustible dans la zone de précalcination étant réglée automatiquement en service normal en fonction de la température des gaz du réchauffeur à cyclones de manière qu'en cas d'abaissement de cette température des gaz, le débit de combustible introduit augmente et inversement, procédé caractérisé en ce qu'il consiste essentiellement à mesurer également la température de la matière après son passage dans la zone de précalcination, à déterminer la différence entre cette température de la matière et ladite température de gaz et à faire passer en service manuel le réglage de l'introduction du combustible dans la zone de précalcination lorsque cette différence de températures atteint un maximum ou un minimum.

2. Procédé selon la revendication 1 mis en œuvre à l'aide d'une installation dans laquelle la zone de précalcination est formée par la canalisation de circulation de gaz qui relie le four tubulaire rotatif à l'étage inférieur du réchauffeur à cyclones, caractérisé en ce qu'il consiste à régler en service normal l'introduction du combustible dans la zone de précalcination en fonction de la température des gaz évacués de l'étage inférieur des cyclones et à surveiller la différence entre cette température des gaz évacués et la température de la matière séparée dans l'étage inférieur des cyclones.

3. Procédé selon les revendications 1 et 2 mis en œuvre à l'aide d'une installation dans laquelle l'étage inférieur des cyclones est formé d'au moins deux cyclones monté en parallèle, caractérisé en ce qu'il consiste essentiellement à régler en service normal l'introduction de combustible dans la zone de précalcination en fonction de la moyenne des températures des gaz évacués des deux cyclones de l'étage inférieur, à surveiller la différence entre chacune des deux températures des gaz évacués et la température de la matière séparée et sortant du cyclone correspondant de l'étage inférieur et à faire passer ensuit le réglage de l'introduction du combustible dans la zone de précalcination en service manuel lorsque l'une des deux différences de températures atteint un maximum ou un minimum.

4. Procédé selon les revendications 1 et 2 dans lequel la consigne de la différence entre la température des gaz et celle de la matière est de 20°C, caractérisé en ce que le passage de l'introduction du combustible en service manuel a lieu pour un minimum de la différence des températures de 0°C et pour un maximum de 40°C.

FIG. 1

FIG. 2